# EUROPEAN PATENT APPLICATION

(11) **EP 4 761 147 A1**
(43) Date of publication of application: **17.06.2026**
(21) Application number: 25176397.5
(22) Date of filing: 14.05.2025
(51) Int. Cl.: H04B 17/12, H04B 17/16, H04B 17/19, H04B 17/18, H04B 17/00, H01Q 3/26

(54) **ARRAY ANTENNA SYSTEM WITH BOTH OVER-THE-AIR TESTING MECHANISM AND CIRCUIT SELF-CALIBRATION MECHANISM**

(30) Priority: 12.12.2024 TW 113148426
(71) Applicant: Strong-Wave Radio Technology Inc., Taoyuan City (TW)
(72) Inventor: Chou, Hsi Tseng, Taoyuan City (TW); Yan, Zhi Da, Taoyuan City (TW); An, Chien Hsin, Taoyuan City (TW)
(74) Representative: Bandpay & Greuter

(57) **Abstract**

An array antenna system with an over-the-air (OTA) testing mechanism and a circuit self-calibration mechanism includes antenna units arranged as an array structure; radio frequency (RF) modules electrically connected to the antenna units, respectively; a processing device having an OTA testing calibration database; and signal management modules. In the circuit self-calibration mechanism, the processing device can send to and receive from the RF modules and signal management modules RF signals, so as to obtain corresponding to-be-analyzed signals; based on the to-be-analyzed signals and contents of the OTA testing calibration database, obtain two sets of calibration information through computation, respectively; and compute with the two sets of calibration information to obtain the final calibration parameters. Accordingly, the array antenna system when at work can perform the OTA testing mechanism and circuit self-calibration mechanism at the same time based on the OTA testing calibration database's contents, thereby optimizing its radiation features.

## Description

### FIELD

The present disclosure relates to an array antenna system, and more particularly to an array antenna system that has both an over-the-air (OTA) testing mechanism and a circuit self-calibration mechanism and can obtain calibration information and therefore final calibration parameters through the two mechanisms, so that the array antenna system can perform independent calibration in real-time operation without needing to establish a communication link with an external system (e.g., an OTA-testing-mechanism-related system).

### BACKGROUND

Antennas are core elements in wireless signal transmission and reception. The working states of Antennas have direct impact on the signal quality, communication distance, and reliability of wireless communication and of radar systems. In particular, active array antennas are called for in high-frequency long-range applications such as wireless communication and radar in order to produce the high gain, small beam width, and other radio frequency (RF) features required for system operation, and the performances of these active array antennas are critical to the effects of the entire systems. As an active array antenna is typically composed of dozens or hundreds of antenna units, it is necessary to make sure that each active antenna unit works properly and that different antennas operate in coordination with one another. Consequently, precise calibration of active array antennas to ensure in real time that their performances conform to the design specifications is a technical requirement on which antenna manufacturers have placed much emphasis.

Conventionally, antenna calibration involves measuring such key parameters of an antenna under test as its gain, radiation pattern, and frequency response, and it is required that the calibration be performed with OTA testing equipment in an anechoic chamber during the manufacturing stage as well as the research and development stage. The testing method includes forming a communication link between a test antenna and the array antenna to be tested, in order to calibrate the performance of the latter. The foregoing calibration test aims to ensure that an antenna having passed the test can transmit and receive signals stably and maintain its intended performance in field operation. In actual use, however, antennas face many challenges that may cause wear, damage, or a reduction in precision of the active and passive elements of an active array antenna system such that the radiation features of those elements are compromised and no longer satisfy system operation requirements. For example, a drastic change in ambient temperature may result in failure of an active element. Therefore, an active array antenna system must be returned to the manufacturer's lab on a regular basis in order to be calibrated, to have malfunctioning elements tested, and to receive the required maintenance. However, returning an array antenna for testing and maintenance is time-consuming and costly, and the lab work requires expensive equipment. This is especially true when a large antenna array is to be calibrated.

It can be known from the above that, although the importance of real-time calibration of active array antenna systems is widely recognized, the existing method of returning such a system to its manufacturer for calibration and testing not only causes system downtime, but also entails complicated calibration equipment that cannot be operated by a general user.

### SUMMARY

Accordingly, the array antenna system when at work can, based on the OTA testing calibration database's contents, perform the OTA testing mechanism and circuit self-calibration mechanism at the same time, obtain two sets of calibration information corresponding to the two mechanisms, respectively, through their respective computation, wherein the two sets of calibration information are associated to each other, and compute with the two sets of calibration information to obtain the final calibration parameters, so as to adjust the features of the RF modules, thereby optimizing the radiation features of the array antenna system.

Certain aspects of the present disclosure are directed to an array antenna system with an OTA testing mechanism and a circuit self-calibration mechanism. The array antenna system includes a plurality of antenna units arranged as an array structure; a plurality of radio frequency (RF) modules, each electrically connected to a corresponding one of the plurality of antenna units; a processing device electrically connected to each of the plurality of RF module; and a plurality of signal management modules, each disposed between a corresponding one of the plurality of antenna units and a corresponding one of the plurality of RF modules. The processing device has therein an OTA testing calibration database storing testing parameters obtained through the OTA testing mechanism in advance, and is configured to receive a source signal that is a baseband signal or an intermediate frequency (IF) signal and convert the source signal into a transmission signal that is an RF signal. Each signal management module is electrically connected to the processing device, and configured to divert or introduce at least a portion of a power of at least one RF signal to form the circuit self-calibration mechanism. When the array antenna system is in a transmitting mode, the processing device is configured to send a first plurality of transmission signals to the plurality of RF modules, respectively, each of the signal management modules is configured to divert at least a portion of a first power of a corresponding one of the first plurality of transmission signals on a corresponding main RF path, and send the corresponding one of the first plurality of transmission signals with the diverted portion of the first power to the processing device through a circuit self-calibration path, and the processing device is further configured to convert the corresponding one of the first plurality of transmission signals with the diverted portion of the first power into a corresponding to-be-analyzed signal, obtain a first set of calibration information based on the to-be-analyzed signal and a second set of calibration information based on the contents of the OTA testing calibration database, and obtain final calibration parameters based on the first set of calibration information and the second set of calibration information. When the array antenna system is in a receiving mode, the processing device is configured to send a second plurality of transmission signals to the plurality of signal management modules, respectively, through corresponding circuit self-calibration paths, each of the plurality of signal management modules is configured to introduce at least a portion of a second power of a corresponding one of the second plurality of transmission signals into a corresponding main RF path that corresponds to one of the plurality of RF modules, the correspond one of the plurality of RF modules is configured to send the corresponding one of the second plurality of transmission signals with the introduced portion of the second power to the processing device, and the processing device is further configured to convert the corresponding one of the second plurality of transmission signals with the introduced portion of the second power into a corresponding to-be-analyzed signal, obtain a third set of calibration information based on the to-be-analyzed signal corresponding to the corresponding one of the second plurality of transmission signals with the introduced portion of the second power, obtain the second set of calibration information based on the contents of the OTA testing calibration database, and obtain final calibration parameters based on the second set of calibration information and the third set of calibration information.

In certain embodiments, the processing device includes an upconverter configured to convert the baseband signal or the IF signal into the RF signal; a downconverter configured to convert the RF signal into the baseband signal or the IF signal; and a signal processing module electrically connected to the upconverter, the downconverter and the OTA testing calibration database, and configured to analyze, and compute with, the contents of the OTA testing calibration database, the to-be-analyzed signal corresponding to the corresponding one of the first plurality of transmission signals with the diverted portion of the first power, and the to-be-analyzed signal corresponding to the corresponding one of the second plurality of transmission signals with the introduced portion of the second power, and obtain the first set of calibration information, the second set of calibration information, and the third set of calibration information.

In certain embodiments, the upconverter and the downconverter are integrated as an up-down converter.

**In** certain embodiments, the processing device includes a first upconverter configured to convert the baseband signal or the IF signal into the RF signal, and be applied to main RF paths in the circuit self-calibration mechanism so as to send the first plurality of transmission signals to the plurality of RF modules, respectively; a first downconverter configured to convert the RF signal into the baseband signal or the IF signal, and be applied to the main RF paths in the circuit self-calibration mechanism so as to receive the corresponding one of the second plurality of transmission signals with the introduced portion of the second power; a second upconverter configured to convert the baseband signal or the IF signal into the RF signal, and be applied to the circuit self-calibration paths in the circuit self-calibration mechanism so as to send the second plurality of transmission signals to the plurality of signal management modules, respectively; a second downconverter configured to convert the RF signal into the baseband signal or the IF signal, and be applied to the circuit self-calibration paths in the circuit self-calibration mechanism so as to receive the corresponding one of the first plurality of transmission signals with the diverted portion of the first power; and a signal processing module electrically connected to the first upconverter, the first downconverter, the second upconverter, the second downconverter and the OTA testing calibration database, and configured to analyze, and compute with, the contents of the OTA testing calibration database, the to-be-analyzed signal corresponding to the corresponding one of the first plurality of transmission signals with the diverted portion of the first power, and the to-be-analyzed signal corresponding to the corresponding one of the second plurality of transmission signals with the introduced portion of the second power, and obtain the first set of calibration information, the second set of calibration information, and the third set of calibration information.

In certain embodiments, the first upconverter and the first downconverter are integrated as a first up-down converter, and the second upconverter and the second downconverter are integrated as a second up-down converter.

In certain embodiments, the processing device includes an upconverter configured to convert the baseband signal or the IF signal into the RF signal; a downconverter configured to convert the RF signal into the baseband signal or the IF signal; a power detector configured to receive the corresponding one of the first plurality of transmission signals with the diverted portion of the first power, and measure and obtain an RF power value corresponding to the corresponding one of the first plurality of transmission signals with the diverted portion of the first power; and a signal processing module electrically connected to the upconverter, the downconverter, the power detector and the OTA testing calibration database, and configured to analyze, and compute with, the contents of the OTA testing calibration database, the to-be-analyzed signal corresponding to the corresponding one of the first plurality of transmission signals with the diverted portion of the first power, and the to-be-analyzed signal corresponding to the corresponding one of the second plurality of transmission signals with the introduced portion of the second power, and obtain the first set of calibration information, the second set of calibration information, and the third set of calibration information.

In certain embodiments, the upconverter and the downconverter are integrated as an up-down converter.

In certain embodiments, each of the plurality of signal management modules is a directional coupler or a diplexer.

In certain embodiments, the processing device further includes a path selection module. In the circuit self-calibration mechanism, main RF paths include normal transmission paths and normal reception paths, and the circuit self-calibration paths include transmission circuit self-calibration paths and reception circuit self-calibration paths. The processing device is configured to, through the path selection module: send the first plurality of transmission signals to the plurality of RF modules through the normal transmission paths; send the second plurality of transmission signals to the plurality of signal management modules through the reception circuit self-calibration paths; receive the corresponding one of the second plurality of transmission signals with the introduced portion of the second power through a corresponding one of the normal reception paths; and receive the corresponding one of the first plurality of transmission signals with the diverted portion of the first power through a corresponding one of the transmission circuit self-calibration paths.

In certain embodiments, in the circuit self-calibration mechanism, any signal transmitting along any of the normal transmission paths, the normal reception paths, the transmission circuit self-calibration paths and reception circuit self-calibration paths enters or leaves the processing device though a single RF port.

In certain embodiments, the path selection module is an RF switch, a directional coupler, or a diplexer.

In certain embodiments, the testing parameters in the OTA testing calibration database are obtained through at least one OTA testing method of an orthogonal beam method, an element-by-element on-off method, a phase toggling method, and a successive projection method.

In certain embodiments, the array antenna system further includes a signal source device configured to generate the source signal.

These and other aspects of the present disclosure will become apparent from the following description of the embodiment taken in conjunction with the following drawings and their captions, although variations and modifications therein may be affected without departing from the spirit and scope of the novel concepts of the disclosure.

### BRIEF DESCRIPTION OF THE DRAWINGS

The present disclosure will become more fully understood from the following detailed description and accompanying drawings.
FIG. 1 is a schematic diagram of an array antenna system according to certain embodiments of the present disclosure.
FIG. 2A is a schematic diagram showing a path selection module and paths for selection by the path selection module according to certain embodiments of the present disclosure.
FIG. 2B is a schematic diagram showing the path selection module being an RF switch according to certain embodiments of the present disclosure.
FIG. 2C is a schematic diagram showing the path selection module being a directional coupler according to certain embodiments of the present disclosure.
FIG. 3 is a schematic diagram of an array antenna system according to certain embodiments of the present disclosure.
FIG. 4 is a schematic diagram of an array antenna system according to certain embodiments of the present disclosure.

### DETAILED DESCRIPTION

The present disclosure is more particularly described in the following examples that are intended as illustrative only since numerous modifications and variations therein will be apparent to those skilled in the art. Like numbers in the drawings indicate like components throughout the views. As used in the description herein and throughout the claims that follow, unless the context clearly dictates otherwise, the meaning of "a", "an", and "the" includes plural reference, and the term "and/or" includes any and all combinations of one or more of the associated listed items. Titles or subtitles can be used herein for the convenience of a reader, which shall have no influence on the scope of the present disclosure.

The accompanying drawings are schematic and may not have been drawn to scale. The terms used herein generally have their ordinary meanings in the art. In the case of conflict, the present document, including any definitions given herein, will prevail. The same thing can be expressed in more than one way. Alternative language and synonyms can be used for any term(s) discussed herein, and no special significance is to be placed upon whether a term is elaborated or discussed herein. A recital of one or more synonyms does not exclude the use of other synonyms. The use of examples anywhere in this specification including examples of any terms is illustrative only, and in no way limits the scope and meaning of the present disclosure or of any exemplified term. Likewise, the present disclosure is not limited to various embodiments given herein. Numbering terms such as "first", "second" or "third" can be used to describe various components, materials, objects, or the like, which are for distinguishing one component/material/object from another one only, and are not intended to, nor should be construed to impose any substantive limitations, assembly sequence or disposition sequence in actual application on the components, materials, objects, or the like.

The term "connected" or "electrically connected" as may be referred to in the present disclosure includes connection configurations such as direct connection between two components, indirection connection between two components with at least one component being provided between the two components, etc.

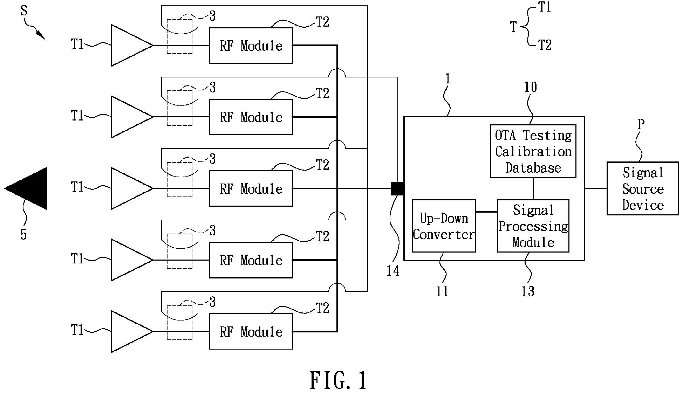

Certain aspects of the present disclosure are directed to an array antenna system with both an OTA testing mechanism and a circuit self-calibration mechanism. During operation, the array antenna system S not only can obtain through the circuit self-calibration mechanism the corresponding calibration information, but also can use this calibration information together with the pre-stored testing parameters obtained through the OTA testing mechanism to carry out real-time calibration independently in different environments and under different conditions, thereby optimizing the radiation features of the array antenna system S without having to carry out the OTA testing mechanism while the system is in use. Referring to FIG. 1, in certain embodiments, the array antenna system S includes a plurality of antenna units T1, a plurality of RF modules T2, a processing device 1, and a plurality of signal management modules 3. Each antenna unit T1 and the corresponding RF module T2 jointly form an antenna portion T. The term "antenna portion T" refers to any antenna structure suitable for use in the transmission of electromagnetic waves.

Referring to FIG. 1, the antenna units T1 are configured to transmit and/or receive electromagnetic waves and can be arranged as an array structure. Each RF module T2 is electrically connected to the corresponding antenna unit T1, and each RF module T2 can include active electronic elements and passive electronic elements in order to process and adjust RF signals. The electronic elements constituting the RF modules T2 can vary with the purpose of use of the antenna units T1 (e.g., to transmit or receive electromagnetic waves). For example, when the antenna units T1 are used to transmit electromagnetic waves (i.e., when the array antenna system S is to operate in the transmitting mode), the active electronic elements and passive electronic elements of the RF modules T2 can form transmitting modules with a beam forming function so that the radiation pattern of the array antenna system S can be enhanced in a particular direction. The active electronic elements of the transmitting modules can include but are not limited to power amplifiers, phase shifters, attenuators, etc., and the passive electronic elements of the transmitting modules can include but are not limited to resistors, capacitors, filters, etc.

With continued reference to FIG. 1, when the antenna units T1 are used to receive electromagnetic waves (i.e., when the array antenna system S is to operate in the receiving mode), the active electronic elements and passive electronic elements of the RF modules T2 can form receiving modules to increase the sensitivity of signal reception in a particular direction and meet the requirement of beam formation. The active electronic elements of the receiving modules can include but are not limited to low noise amplifiers, phase shifters, attenuators, etc., and the passive electronic elements of the receiving modules can include but are not limited to resistors, capacitors, filters, etc. When the antenna units T1 are used to both transmit and receive electromagnetic waves, the active electronic elements and passive electronic elements of the RF modules T2 can form transmitting modules and receiving modules to support the requirement of switching between the two purposes of use.

With continued reference to FIG. 1, in certain embodiments, the processing device 1 can be electrically connected to each of the RF modules T2 and each of the signal management modules 3, so as to transmit signals to the RF modules T2 and the signal management modules 3, respectively, and so that each of the RF modules T2 and the signal management modules 3 can transmit signals to the processing device 1. The processing device 1 can receive a source signal transmitted by a signal source device P, and can convert the source signal into a transmission signal. The aforementioned source signal can be a baseband signal or an IF signal. For the convenience of explanation, the term "a baseband/IF signal" as used in the present disclosure refers to one of a baseband signal and an IF signal. The aforementioned transmission signal is an RF signal. In other words, the processing device 1 has the ability to convert baseband/IF signals into RF signals, and convert RF signals into baseband/IF signals. Further, although the processing device 1 is shown as a single device in FIG. 1, the processing device 1 can also be composed of multiple devices according to actual needs to adapt to various production or application environments. Those with general knowledge in this field can adjust the specific circuit structure processing device 1 according to the subsequent description of the present disclosure.

With continued reference to FIG. 1, the processing device 1 is provided therein with an OTA testing calibration database 10. The OTA testing calibration database 10 stores the testing parameters obtained by running the OTA testing mechanism of the array antenna system S in advance. The OTA testing mechanism serves mainly to assess the radiation performance and receiving ability of the array antenna system S in a wireless environment so that the array antenna system S can work as expected when put to actual use. The procedures by which the testing parameters in the OTA testing calibration database 10 are obtained is as follows, without being limiting. To run the OTA testing mechanism when the array antenna system S operates in the transmitting mode, an OTA measuring device 5 is used to receive the radiated RF signal transmitted by each antenna unit T1 and send the radiated RF signals received to a piece of analysis equipment (not shown). When the array antenna system S operates in the receiving mode, the OTA measuring device 5 emits a reference RF signal, which is received by one or more antenna units T1 and then sent by each antenna unit T1 through the corresponding RF module T2 to the analysis equipment either directly or indirectly. Depending on practical needs, the processing device 1 in the array antenna system S may have the functions of and serve as the analysis equipment; in other words, the analysis equipment mentioned herein may be replaced by the processing device 1.

With continued reference to FIG. 1, the analysis equipment can extract a plurality of signal features from each of the radiated RF signals and reference RF signals received, including but not limited to one or more pieces of basic data such as phase, amplitude, frequency, time delay, etc. The basic data reflects how the features are changed during the signal receiving or transmitting process of the array antenna system S. Each piece of the basic data discloses the effects of the internal circuit elements (e.g., the RF modules T2) of the array antenna system S on a signal while the system is in operation. The analysis equipment computes with each piece of the basic data to obtain the corresponding testing parameter (a phase compensation value, a gain adjustment value, a time delay compensation value, etc.), and the testing parameters obtained are then used to calibrate the array antenna system S. The OTA testing mechanism is not necessarily run to test the array antenna system S as a whole. It is feasible to test the antenna portions T alone; for example, the OTA testing mechanism may be carried out during the manufacturing process of the antenna portions T. Therefore, the antenna portions T may or may not have been electrically connected to their respective signal management modules 3 while the OTA testing mechanism is running.

The OTA testing mechanism as adopted in the present disclosure is further described as follows. However, the present disclosure is not limited thereto. In addition, when running the OTA testing mechanism, the radiated RF signals emitted by the antenna portions T can come from the processing device 1 or other equipment, and the reference RF signal emitted by the OTA measuring device 5 can come from the processing device 1 or other equipment.

### (1) Element-by-Element On-Off Method

When the antenna portions T are in the transmitting mode (i.e., when the antenna units T1 are used to transmit electromagnetic waves), the antenna portions T to be tested are sequentially turned on, and the antenna portions T that need not be tested are turned off. The OTA measuring device 5 receives the radiated RF signals of the antenna portions T that are turned on, and then sends the radiated RF signals received to the analysis equipment. The analysis equipment measures the radiation features of the antenna portions T that are turned on, and thereby extracts the corresponding basic data to enable obtainment of the corresponding testing parameter(s).

When the antenna portions T are in the receiving mode (i.e., when the antenna units T1 are used to receive electromagnetic waves), the antenna portions T to be tested are sequentially turned on in order to receive the reference RF signal emitted by the OTA measuring device 5 and send the reference RF signal received to the analysis equipment. The analysis equipment measures the reception features of the antenna portions T that are turned on, and thereby extracts the corresponding basic data to enable obtainment of the corresponding testing parameter(s).

### (2) Phase Toggling Method

When the antenna portions T are in the transmitting mode, one of the antenna portions T is selected as the target of measurement. The OTA measuring device 5 receives the radiated RF signals of a plurality of antenna portions T including the selected antenna portion T and sends the radiated RF signals received to the analysis equipment in order for the analysis equipment to obtain a radiation field feature (i.e., an overall radiation feature) of those antenna portions T. Then, the phases of the radiated RF signals of those antenna portions T other than the selected antenna portion T are each changed by 180 degrees, and the OTA measuring device 5 once again receives the radiated RF signals of the plurality of antenna portions T and sends the radiated RF signals received to the analysis equipment in order for the analysis equipment to obtain another radiation field feature of those antenna portions T. The analysis equipment then adds the radiation field features obtained from the two measurements to cancel the contributions of the unselected antenna portions T, leaving only the radiation feature of the selected antenna portion T, and then the analysis equipment extracts the basic data corresponding to the selected antenna portion T to enable obtainment of the corresponding testing parameter(s).

### (3) Orthogonal Beam Method

In this method, the transmitting performance can be enhanced through the beam perpendicularity of each antenna portion T. The beam perpendicularity of each antenna portion T depends on the arrangement of the corresponding RF paths and the excitation states of the active electronic elements (e.g., the power amplifier(s) and phase shifters) of the antenna portion T. When the antenna portions T are in the transmitting mode, each antenna portion T is supposed to operate in a normal operation state, i.e., with each antenna portion T transmitting a radiated RF signal according to its normal excitation conditions. The OTA measuring device 5 receives the radiated RF signal transmitted by each antenna portion T and sends the radiated RF signals received to the analysis equipment, and the analysis equipment extracts the required basic data (e.g., the phase and amplitude) of each radiated RF signal received, calculates the beam perpendicularity information of each antenna portion T based on the basic data, and thereby obtains the corresponding testing parameter(s).

### (4) Successive Projection Method

In this method, when in the transmitting mode, all the antenna portions T are excited at the same time in order for each antenna portion T to emit a radiated RF signal in a normal operation state. The OTA measuring device 5 receives the radiated RF signal of each antenna portion T and sends the radiated RF signals received to the analysis equipment. The analysis equipment extracts the corresponding basic data, measures RF power with a power detector or power meter, and calculates for each antenna portion T the corresponding excitation weight according to the current RF power data. Based on the excitation weights, antenna portions T emit radiated RF signals again. The OTA measuring device 5 again receives the radiated RF signal of each antenna portion T and sends the radiated RF signals received to the analysis equipment. The analysis equipment again measures RF power with the power detector or power meter, compares the RF power currently obtained with the RF power obtained from the previous measurement, and adjusts the excitation weights according to the comparison result in order to optimize the weight values and produce new excitation weights. The process stated above is iterated until the weight values are optimal; in other words, the testing parameters (e.g., weight values) for use in calibration are derived by the analysis equipment from the results of subsequent projection computation.

When the antenna portions T are in the receiving mode, the OTA measuring device 5 sends a reference RF signal to each antenna portion T in order for each antenna portion T to receive the reference RF signal in a normal operation state. Each antenna portion T then sends the reference RF signal received to the analysis equipment. The analysis equipment extracts the corresponding basic data, measures RF power with the power detector or power meter, and calculates for each antenna portion T the corresponding reception weight according to the current RF power data. After that, each antenna portion T receives the reference RF signal again based on a new reception weight, and sends the reference RF signal received to the analysis equipment. The analysis equipment again measures RF power with the power detector or power meter, compares the RF power currently obtained with the RF power obtained from the previous measurement, and adjusts the reception weights of the antenna portions T according to the comparison result in order to optimize the weight values and produce new reception weights. The process stated above is iterated until the weight values are optimal; in other words, the testing parameters (e.g., weight values) for use in calibration are derived by the analysis equipment from the results of subsequent projection computation.

Further, the circuit self-calibration mechanism according to the present disclosure is described as follows. Referring to FIG. 1, the circuit self-calibration mechanism generally includes two types of signal paths:
(1) Main RF paths: When the array antenna system S is in normal operation (either in the transmitting mode or the receiving mode), and the antenna portions T are transmitting electromagnetic waves outward or receiving electromagnetic waves from the outside, the paths along which the RF signals propagate are the main RF paths. When in the transmitting mode, the processing device 1 sends RF signals through the RF modules T2 to the antenna units T1 so that the antenna units T1 can transmit electromagnetic waves outward, and the paths along which the RF signals propagate are the main RF paths in the transmitting mode. When in the receiving mode, the antenna units T1 receive electromagnetic waves and send RF signals through the RF modules T2 to the processing device 1, and the paths along which the RF signals propagate are the main RF paths in the receiving mode.
(2) Circuit self-calibration paths: These are the paths additionally required by the array antenna system S during self-calibration. When in the transmitting mode, each signal management module 3 diverts at least a portion of the power of the RF signals in the main RF path of the corresponding antenna portion T and sends the RF signals with the diverted power to the processing device 1, and the paths along which the RF signals with the diverted power are sent are the circuit self-calibration paths in the transmitting mode. When in the receiving mode, the processing device 1 sends transmission signals to the signal management modules 3 so that the signal management modules 3 can introduce at least a portion of the power of the transmission signals into the main RF paths in the receiving mode, and the paths along which the processing device 1 sends the transmission signals to the signal management modules 3 are the circuit self-calibration paths in the receiving mode.

With continued reference to FIG. 1, the signal management modules 3 serve as junctions between the main RF paths and the circuit self-calibration paths, and can be directional couplers, power dividers, etc., and can divert at least a portion of the power of RF signals in the main RF paths and introduce the RF signals with the diverted power into the circuit self-calibration paths, and/or divert at least a portion of the power of RF signals in the circuit self-calibration paths and introduce the RF signals with the diverted power into the main RF paths. When the signal management modules 3 are used to diver RF signals, the diverting process does not have a significant effect on the RF signals in the main RF paths, and this ensures normal operation of the antenna portions T.

With continued reference to FIG. 1, in certain embodiments, the signal management modules 3 are directional couplers, and each of the signal management modules 3 is located between the corresponding antenna unit T1 and the corresponding RF module T2. When the antenna units T1 are used to transmit electromagnetic waves, the transmission signals are transmitted from the RF modules T2 to the antenna units T1, and the signal management modules 3 divert (by way of coupling) at least a portion of the power of the RF signals in the transmission signals and send the RF signals with the diverted power to the processing device 1, wherein the RF signals with the diverted power are capable of reflecting how they have been affected by the RF modules T2. When the antenna units T1 are used to receive electromagnetic waves, at least a portion of the power of the transmission signals is introduced into the antenna portions T via the signal management modules 3, and then the introduced transmission signals having at least a portion of the power are sent to the processing device 1 through the RF modules T2, wherein the RF signals sent to the processing device 1 are capable of reflecting how they have been affected by the RF modules T2.

With continued reference to FIG. 1, the processing device 1 can convert each RF signal received into a to-be-analyzed signal, and the RF signal received is a baseband/IF signal. The "RF signal received" can be a RF signal with a diverted power sent by a signal management module 3 or an introduced RF signal sent by an RF module T2 to the processing device 1. In addition, the processing device 1 can extract the signal feature(s) (e.g., the basic data) of each to-be-analyzed signal and then analyze, and compute with, the signal feature(s), e.g., to assess the differences between the basic data and the expected performances, so as to produce one or more pieces of calibration information about phase deviation, gain, frequency response, radiation pattern characteristics, time delay compensation, coupling coefficients, etc. Thus, the processing device 1 can obtain one set of calibration information through computation based on the to-be-analyzed signals, and obtain one set of calibration information through computation based on the contents of the OTA testing calibration database 10 (e.g., testing parameters); that is to say, the processing device 1 can obtain, through computation, the calibration information corresponding to the OTA testing mechanism and the calibration information corresponding to the circuit self-calibration mechanism, and then compute with the two sets of calibration information to obtain the final calibration parameters for use in calibrating the array antenna system S. In actual use, therefore, the array antenna system S can obtain the final calibration parameters independently and perform calibration in real time to ensure that its performance conforms to the manufacturer's specifications or users' expectations. There is no need to run the OTA testing mechanism again when the system is in actual use. Consequently, the convenience and precision of calibration are greatly enhanced.

The array antenna system S is further described as follows. It is noted that in the drawings, the lines between the elements are drawn only schematically. The lines are intended to present the transmission paths of signals but not to show the actual connection methods in detail. Referring to FIG. 1, in certain embodiments, the processing device 1 includes an up-down converter 11 and a signal processing module 13. The up-down converter 11 can convert baseband/IF signals into RF signals, convert RF signals into baseband/IF signals, and can be electrically connected to the RF module T2 and the signal processing module 13. The up-down converter 11 includes a frequency increasing unit and a frequency decreasing unit. The frequency increasing unit is configured to convert baseband/IF signals into RF signals, and the frequency decreasing unit is configured to convert RF signals into baseband/IF signals. The signal processing module 13 is configured to analyze, and compute with, the to-be-analyzed signals in order to obtain the corresponding calibration information.

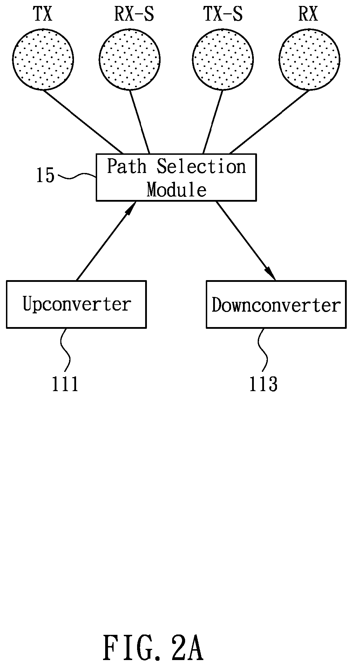

In certain embodiments, the up-down converter 11 can be split into two independent elements (for example, the upconverter 111 and the downconverter 113 in FIG. 2A), and is not limited to being a single element. The upconverter 111 is equivalent to the above-referenced frequency increasing unit and can convert source signals into transmission signals, and the downconverter 113 is equivalent to the above-referenced frequency decreasing unit, and can convert each RF signal with the diverted or introduced power into the corresponding to-be-analyzed signal. Based on actual needs, the upconverter 111 can be a block upconverter (BUC), and the down converter 113 can be a block downconverter (BDC). It is noted that the up-down converter mentioned in relation to the following embodiments can be substituted with an independent upconverter and downconverter. For example, a first up-down converter can be substituted, when it comes to its connection relationships with other elements and its functions, with a first upconverter and a first downconverter; a second up-down converter can be substituted, when it comes to its connection relationships with other elements and its functions, with a second upconverter and a second downconverter; and so on.

To simplify hardware requirements and reduce the complexity in design and maintenance, the processing device 1 may use a single RF port 14 to output signals and receive signals. Moreover, although the main RF paths and circuit self-calibration paths are depicted in the drawings as independent connecting lines to clearly show the connection relationships and signal transmission relationships of the elements of the array antenna system S, those paths eventually converge at a position close to the processing device 1 and enter the processing device 1 through the single RF port 14 (as shown in FIG. 1) in order for the signals in the paths to be processed by the up-down converter 11. The design of the single RF port 14 may also be adopted in the embodiments described *infra.*

Referring to FIG. 1 to FIG. 2A, the processing device 1 further includes a path selection module 15 in order to process signals correctly. The path selection module 15 may be electrically connected to an upconverter 111 and a downconverter 113 or to the up-down converter 11, and is configured to connect the upconverter 111 and the downconverter 113 (or the up-down converter 11) to the main RF paths and circuit self-calibration paths corresponding to the working mode (i.e., the transmitting mode or the receiving mode) of the antenna portions T. Depending on the operation mode of the array antenna system S, the main RF paths and the circuit self-calibration paths can be further divided as follows, and the path selection module 15 can switch among these paths.
(1) Normal transmission paths TX: These are the paths along which the transmission signals are sent from the upconverter 111 (or the frequency increasing unit of the up-down converter 11) to the RF modules T2 in the transmitting mode.
(2) Transmission circuit self-calibration paths TX-S: These are the paths along which the RF signals with the diverted power are sent from the signal management modules 3 to the downconverter 113 (or the frequency decreasing unit of the up-down converter 11) in the transmitting mode.
(3) Normal reception paths RX: These are the paths along which the introduced RF signals to be sent to the processing device 1 are sent from the RF modules T2 to the downconverter 113 (or the frequency decreasing unit of the up-down converter 11) in the receiving mode.
(4) Reception circuit self-calibration paths RX-S: These are the paths along which the transmission signals are sent from the upconverter 111 (or the frequency increasing unit of the up-down converter 11) to the signal management modules 3 in the receiving mode.

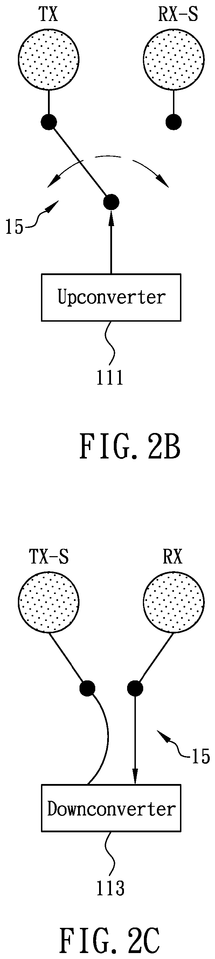

Based on actual needs, the path selection module 15 is not limited to the single-element configuration shown in FIG. 2A. In certain embodiments, the path selection module 15 can be a combination of a plurality of independent elements. Referring to FIG. 2B, the path selection module 15 may be in the form of an RF switch, with one end electrically connected to the upconverter 111 and the other end switchable between "the normal transmission paths TX" and "the reception circuit self-calibration paths RX-S" in order to control the direction of signal transmission. In certain embodiments, referring to FIG. 2C, the path selection module 15 may be in the form of a directional coupler or diplexer and disposed between the downconverter 113 and the "normal reception paths RX" and "transmission circuit self-calibration paths TX-S", to control the direction of some RF signals. In certain embodiments, the path selection module 15 in FIG. 2B can be substituted with the form of a directional coupler or diplexer. In certain embodiments, the path selection module 15 in FIG. 2C can be substituted with the form of an RF switch. It thus can be known that in certain embodiments, the main RF paths and the circuit self-calibration paths can share the same up-down converter 11 or share the same upconverter 111 and downconverter 113.

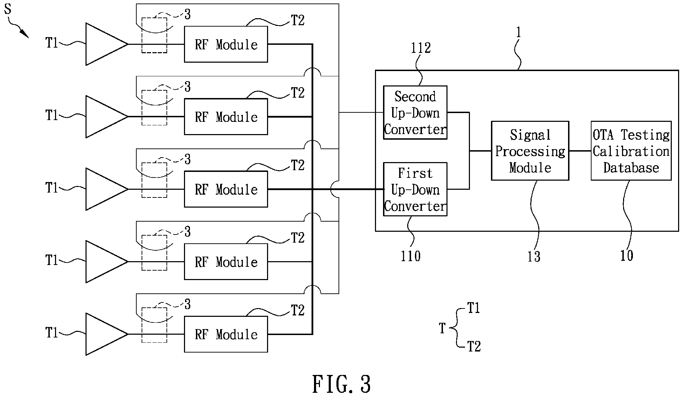

In certain embodiments, the main RF paths and the circuit self-calibration paths may be provided with up-down converters or their respective upconverters and downconverters, respectively. To facilitate description, the drawings referred to below omit the signal source device P, the RF port 14, and the OTA measuring device 5 in FIG. 1 and use new reference numerals only for the new elements; elements having the same functions as their counterparts stated above are indicated by the previously used reference numerals and will not be described repeatedly. Referring to FIG. 3, the processing device 1 includes a first up-down converter 110, a second up-down converter 112, the signal processing module 13, and the OTA testing calibration database 10. The first up-down converter 110 is applied to the main RF paths, and the second up-down converter 112 is applied to the circuit self-calibration paths. The signal processing module 13 is electrically connected to the first up-down converter 110, the second up-down converter 112, and the OTA testing calibration database 10, respectively.

With continued reference to FIG. 3, the first up-down converter 110 is electrically connected to the RF modules T2, respectively, so as to transmit signals to and receive signals from each RF module T2. The frequency increasing unit of the first up-down converter 110 is configured to send at least one RF signal (e.g., a transmission signal) to each RF module T2, and the frequency decreasing unit of the first up-down converter 110 is configured to receive the RF signal(s) sent by each RF module T2. The second up-down converter 112 is electrically connected to each signal management module 3, so as to transmit signals to and receive signals from each signal management module 3. The frequency increasing unit of the second up-down converter 112 is configured to send at least one RF signal (e.g., a transmission signal) to each signal management module 3, and the frequency decreasing unit of the second up-down converter 112 is configured to receive the RF signal(s) sent by each signal management module 3. The signal processing module 13 is configured to send each source signal to the first up-down converter 110 or the second up-down converter 112 in order for the source signal to be converted into the corresponding transmission signal. The signal processing module 13 is also configured to receive the to-be-analyzed signal(s) sent by the first up-down converter 110 or the second up-down converter 112, compute with the to-be-analyzed signal(s) and with the contents of the OTA testing calibration database 10 to obtain the two sets of required calibration information, and then obtain the final calibration parameters by computing with the two sets of calibration information obtained.

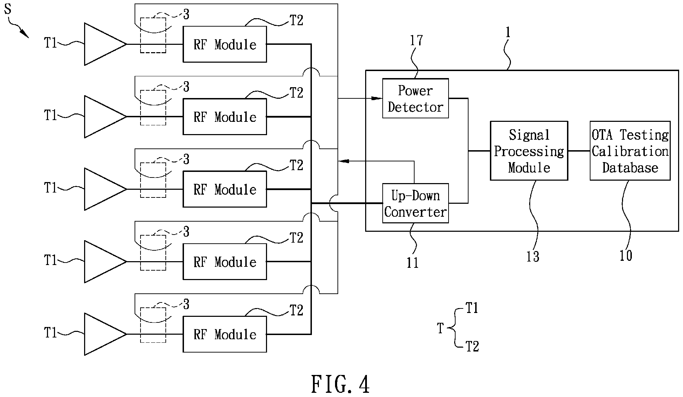

In certain embodiments, the processing device 1 is further provided with a power detector 17 for measuring the RF power values that have been affected by the RF modules T2. To facilitate description, the drawings referred to below omit the signal source device P, the RF port 14, and the OTA measuring device 5 in FIG. 1 and use new reference numerals only for the new elements; elements having the same functions as their counterparts stated above are indicated by the previously used reference numerals and will not be described repeatedly. Referring to FIG. 4, the processing device 1 includes the up-down converter 11, the signal processing module 13, the OTA testing calibration database 10, and a power detector 17. The power detector 17 is configured to receive the RF signals sent by the signal management modules 3 so as to measure the RF power value of each antenna portion T. The signal processing module 13, therefore, is configured to receive the to-be-analyzed signals sent by the up-down converter 11 and the RF power values sent by the power detector 17; analyze, and compute with, the to-be-analyzed signals and the RF power values to obtain the corresponding calibration information; and then compute with this calibration information and the calibration information derived from the OTA testing calibration database 10 to obtain the final calibration parameters. Thus, whether or not the transmission power of the antenna portions T meets the standard can be known by analyzing the RF power values that have been affected by the RF modules T2. When the array antenna system S needs adjustment only to ensure that the RF modules T2 (or antenna portions T) conform to the transmission power requirement, measurement with the power detector 17 alone suffices to obtain the calibration information required for basic power calibration; no phase information is involved. This allows the complexity in design of the processing device 1 to be reduced (for there is no need to consider and analyze the phase and amplitude calibration requirements), and in consequence, a reduction in cost and in the time required for computation can be achieved.

In summary, referring to FIG. 1, The array antenna system S has both the OTA testing mechanism and the circuit self-calibration mechanism. The OTA testing mechanism tests the array antenna system S in advance and stores the testing results (testing parameters) in the OTA testing calibration database 10. The circuit self-calibration mechanism is carried out, after the array antenna system S is put to use, by measuring the key parameters of the circuits in the system, which parameters include but are not limited to phase, gain, and output power, and the measurement does not rely on an external wireless environment and can be conducted under any temperature or time conditions in order to obtain the corresponding to-be-analyzed signals. As the testing parameters and the to-be-analyzed signals are associated with each other, computing with both can yield the corresponding control parameters and signals (i.e., the final calibration parameters), with which the features of the RF modules T2 can be adjusted and the radiation features of the antenna portions T can be optimized. To sum up, the effects and advantages of the array antenna system S include:
(1) Using the signal management modules 3 (e.g., directional couplers or power dividers) to provide the data required for calibration enables a highly efficient data collection process. The measuring process not only allows the basic data to be obtained, but also can produce the required calibration information through computation so that the array antenna system S can be calibrated in real time while in operation.
(2) Signals in the main RF paths as well as in the circuit self-calibration paths can be output and received through a single RF port to reduce the difficulty in design and maintenance.
(3) Without regard to time or temperature, the array antenna system S can measure the antenna portions T in the transmitting mode as well as in the receiving mode so that calibration information can be obtained through further analysis and computation, ensuring that the signal data corresponding to the operation of the array antenna system S, or at least of the antenna portions T, meets the design specifications, and that the array antenna system S can work stably and reliably in actual use.

The foregoing description of the exemplary embodiments of the disclosure has been presented only for the purposes of illustration and description and is not intended to be exhaustive or to limit the disclosure to the precise forms disclosed. Many modifications and variations are possible in light of the above teaching.

The embodiments were chosen and described in order to explain the principles of the disclosure and their practical application so as to enable others skilled in the art to utilize the disclosure and various embodiments and with various modifications as are suited to the particular use contemplated. Alternative embodiments will become apparent to those skilled in the art to which the present disclosure pertains without departing from its scope.

## Claims

1. An array antenna system with an over-the-air (OTA) testing mechanism and a circuit self-calibration mechanism, comprising:
a plurality of antenna units (T1) arranged as an array structure;
a plurality of radio frequency (RF) modules (T2), each electrically connected to a corresponding one of the plurality of antenna units (T1);
a processing device (1) electrically connected to each of the plurality of RF module (T2), having therein an OTA testing calibration database (10) storing testing parameters obtained through the OTA testing mechanism in advance, and configured to receive a source signal that is a baseband signal or an intermediate frequency signal and convert the source signal into a transmission signal that is an RF signal; and
a plurality of signal management modules (3), each disposed between a corresponding one of the plurality of antenna units (T1) and a corresponding one of the plurality of RF modules (T2), electrically connected to the processing device (1), and configured to divert or introduce at least a portion of a power of at least one RF signal to form the circuit self-calibration mechanism,
wherein when the array antenna system (S) is in a transmitting mode, the processing device (1) is configured to send a first plurality of transmission signals to the plurality of RF modules (T2), respectively, each of the signal management modules is configured to divert at least a portion of a first power of a corresponding one of the first plurality of transmission signals on a corresponding main RF path, and send the corresponding one of the first plurality of transmission signals with the diverted portion of the first power to the processing device (1) through a circuit self-calibration path, and the processing device (1) is further configured to convert the corresponding one of the first plurality of transmission signals with the diverted portion of the first power into a corresponding to-be-analyzed signal, obtain a first set of calibration information based on the to-be-analyzed signal and a second set of calibration information based on the contents of the OTA testing calibration database (10), and obtain final calibration parameters based on the first set of calibration information and the second set of calibration information; and
wherein when the array antenna system (S) is in a receiving mode, the processing device (1) is configured to send a second plurality of transmission signals to the plurality of signal management modules (3), respectively, through corresponding circuit self-calibration paths, each of the plurality of signal management modules (3) is configured to introduce at least a portion of a second power of a corresponding one of the second plurality of transmission signals into a corresponding main RF path that corresponds to one of the plurality of RF modules (T2), the correspond one of the plurality of RF modules (T2) is configured to send the corresponding one of the second plurality of transmission signals with the introduced portion of the second power to the processing device (1), and the processing device (1) is further configured to convert the corresponding one of the second plurality of transmission signals with the introduced portion of the second power into a corresponding to-be-analyzed signal, obtain a third set of calibration information based on the to-be-analyzed signal corresponding to the corresponding one of the second plurality of transmission signals with the introduced portion of the second power, obtain the second set of calibration information based on the contents of the OTA testing calibration database (10), and obtain final calibration parameters based on the second set of calibration information and the third set of calibration information.

2. The array antenna system according to claim 1, wherein the processing device (1) comprises:
an upconverter (111) configured to convert the baseband signal or the intermediate frequency signal into the RF signal;
a downconverter (113) configured to convert the RF signal into the baseband signal or the intermediate frequency signal; and
a signal processing module (13) electrically connected to the upconverter (111), the downconverter (113) and the OTA testing calibration database (10), and configured to analyze, and compute with, the contents of the OTA testing calibration database (10), the to-be-analyzed signal corresponding to the corresponding one of the first plurality of transmission signals with the diverted portion of the first power, and the to-be-analyzed signal corresponding to the corresponding one of the second plurality of transmission signals with the introduced portion of the second power, and obtain the first set of calibration information, the second set of calibration information, and the third set of calibration information.

3. The array antenna system according to claim 2, wherein the upconverter (111) and the downconverter (113) are integrated as an up-down converter (11).

4. The array antenna system according to claim 1, 2 or 3 wherein the processing device (1) comprises:
a first upconverter configured to convert the baseband signal or the intermediate frequency signal into the RF signal, and be applied to main RF paths in the circuit self-calibration mechanism so as to send the first plurality of transmission signals to the plurality of RF modules (T2), respectively;
a first downconverter configured to convert the RF signal into the baseband signal or the intermediate frequency signal, and be applied to the main RF paths in the circuit self-calibration mechanism so as to receive the corresponding one of the second plurality of transmission signals with the introduced portion of the second power;
a second upconverter configured to convert the baseband signal or the intermediate frequency signal into the RF signal, and be applied to the circuit self-calibration paths in the circuit self-calibration mechanism so as to send the second plurality of transmission signals to the plurality of signal management modules (3), respectively;
a second downconverter configured to convert the RF signal into the baseband signal or the intermediate frequency signal, and be applied to the circuit self-calibration paths in the circuit self-calibration mechanism so as to receive the corresponding one of the first plurality of transmission signals with the diverted portion of the first power; and
a signal processing module (13) electrically connected to the first upconverter, the first downconverter, the second upconverter, the second downconverter and the OTA testing calibration database (10), and configured to analyze, and compute with, the contents of the OTA testing calibration database (10), the to-be-analyzed signal corresponding to the corresponding one of the first plurality of transmission signals with the diverted portion of the first power, and the to-be-analyzed signal corresponding to the corresponding one of the second plurality of transmission signals with the introduced portion of the second power, and obtain the first set of calibration information, the second set of calibration information, and the third set of calibration information.

5. The array antenna system according to claim 4, wherein the first upconverter and the first downconverter are integrated as a first up-down converter (110), and the second upconverter and the second downconverter are integrated as a second up-down converter (112).

6. The array antenna system according to any one of claims 1 to 5, wherein the processing device (1) comprises:
an upconverter (111) configured to convert the baseband signal or the intermediate frequency signal into the RF signal;
a downconverter (113) configured to convert the RF signal into the baseband signal or the intermediate frequency signal;
a power detector (17) configured to receive the corresponding one of the first plurality of transmission signals with the diverted portion of the first power, and measure and obtain an RF power value corresponding to the corresponding one of the first plurality of transmission signals with the diverted portion of the first power; and
a signal processing module (13) electrically connected to the upconverter (111), the downconverter (113), the power detector (17) and the OTA testing calibration database (10), and configured to analyze, and compute with, the contents of the OTA testing calibration database (10), the to-be-analyzed signal corresponding to the corresponding one of the first plurality of transmission signals with the diverted portion of the first power, and the to-be-analyzed signal corresponding to the corresponding one of the second plurality of transmission signals with the introduced portion of the second power, and obtain the first set of calibration information, the second set of calibration information, and the third set of calibration information.

7. The array antenna system according to claim 6, wherein the upconverter (111) and the downconverter (113) are integrated as an up-down converter (11).

8. The array antenna system according to any of claims 1 to 7, wherein each of the plurality of signal management modules (3) is a directional coupler or a diplexer.

9. The array antenna system according to any of claims 1 to 8, wherein the processing device (1) further comprises a path selection module (15); in the circuit self-calibration mechanism, main RF paths include normal transmission paths (TX) and normal reception paths (RX), and the circuit self-calibration paths include transmission circuit self-calibration paths (TX-S) and reception circuit self-calibration paths (RX-S); and the processing device (1) is configured to, through the path selection module (15):
send the first plurality of transmission signals to the plurality of RF modules (T2) through the normal transmission paths (TX);
send the second plurality of transmission signals to the plurality of signal management modules (3) through the reception circuit self-calibration paths (RX-S);
receive the corresponding one of the second plurality of transmission signals with the introduced portion of the second power through a corresponding one of the normal reception paths (RX); and
receive the corresponding one of the first plurality of transmission signals with the diverted portion of the first power through a corresponding one of the transmission circuit self-calibration paths (TX-S).

10. The array antenna system according to claim 9, wherein in the circuit self-calibration mechanism, any signal transmitting along any of the normal transmission paths (TX), the normal reception paths (RX), the transmission circuit self-calibration paths (TX-S) and reception circuit self-calibration paths (RX-S) enters or leaves the processing device (1) though a single RF port (14).

11. The array antenna system according to claim 9 or 10, wherein the path selection module (15) is an RF switch, a directional coupler, or a diplexer.

12. The array antenna system according to any of claims 1 to 11, wherein the testing parameters in the OTA testing calibration database (10) are obtained through at least one OTA testing method of an orthogonal beam method, an element-by-element on-off method, a phase toggling method, and a successive projection method.

13. The array antenna system according to any of claims 1 to 12, further comprising a signal source device (P) configured to generate the source signal.
